# EUROPEAN PATENT APPLICATION

(11) **EP 2 942 375 A1**
(43) Date of publication of application: **11.11.2015**
(21) Application number: 14167051.3
(22) Date of filing: 05.05.2014
(51) Int. Cl.: C09D 5/02, B05D 1/02, C09D 5/28, C09D 7/12

(54) **Textured PVC panel**

(71) Applicant: Rolvaplast, 9800 Deinze (BE)
(72) Inventor: LOOTENS, Bernard, 9800 Deinze (BE)
(74) Representative: BiiP cvba

(57) **Abstract**

The present invention concerns a texture-painted PVC panel suitable for use in indoor as well as outdoor conditions, and to a method of manufacturing the same. In particular, the present invention relates to a texture-painted PVC panel comprising a PVC panel substrate and a coating applied on at least one main surface thereof, wherein said coating comprises a cured acrylic binder and mineral particles **characterised in that** said coating is applied directly on said at least one main surface without any intermediate primer layer.

## Description

### Technical Field

The present invention relates to a texture-painted PVC panel suitable for use in indoor as well as outdoor conditions, and to a method of manufacturing and using the same.

### Background for the invention

Polyvinyl chloride (PVC) and unplasticized polyvinyl chloride (uPVC) are plastic polymers widely used in construction. PVC panelling or cladding is a commonly used decorative wall finish for interiors or exteriors that is popular for its durability and low-price, as compared to application of more traditional building materials such as wood, clays, or concrete. PCV panels are lightweight, usually hollow-cored, and often provided with tongue-and-groove edges for easy assembly. Despite all these advantages, many consumers still hesitate to apply PVC panels because of their plastic look and unnatural feel. In particular, PVC is known to be extremely difficult to paint; major reason for this being its very low surface energy (41 mN/m at 20°C) - lower than surface energy of water (72 mN/m), which practically results in that water-based paints do not adhere to PVC surfaces. Because of this, water-borne paints, currently preferred for their lower toxicity and costs, are ineffective in covering PVC panels. Indeed, emulsion (latex) paints in general cannot be used for painting PVC without laborious surface preparations like fine-grain sanding or pre-application of a preparatory undercoat called primer (or their combination); which not only slows down the production of a PVC panel but also, notably increases its cost. In particular, the use of a primer is time-consuming as the paint layer can only be applied after the primer had dried. The above-listed problems are particularly pronounced during application of texture paints, comprising suspensions of usually mineral micro-particles that form naturally-looking structures under the coating's surface (e.g. stucco effect) that are very much desired for aesthetic reasons. Application of texturing paints is more complicated than it may seem, as paint formulations have to ensure effective coverage of both the surface to be painted and the particle surfaces and, at the same time prevent the separation of the particles from the paint's liquid. In addition, the particles must resist dislocation on the painted surfaces during and after curing of the film, which in the case of poorly-wettable surfaces such as PVC can be challenged due to formation of paint-deprived gaps between mineral particle to PVC interfaces and a reverse capillary-like effect causing even lesser adherence of waterborne media to PVC.

The particles are usually of mineral origin and comprise silicon oxides or silicate minerals derived from siliciclastic rocks or sands such as quartz, feldspars, various micas etc.; or aragonite or calcite made of calcium carbonate. Most commonly, they are formed by different types of natural or synthetic sands or gravels, sometimes glass fibres or beads. As a consequence, a paint composition with good coating properties for said particles, in principle will also be compatible with mineral-based surfaces such as plaster, brick walls, concrete, or gips, but not with plastics such as PVC.

It is commonly appreciated that texturing additions such as sand immersed in a waterborne paint formulations cannot be directly applied without an intermediate layer of a preparatory undercoat or primer onto PVC as it is done with mineral-based surfaces. Because of the poor wetting of PVC surfaces, waterborne paints with mineral particles tend to merge on them into droplets, causing clumping of sand particles and thus impede even coating. This effect is particularly pronounced during manual application of texture paint by brush or roller. Texture-paint with particles would have to be sprayed under higher pressures onto PVC but in such arrangement, due to limited mixing possibilities, the problem of particle sedimentation is prevalent. For effective spraying, paint formulation should not be too thick; on the other hand, too diluted mixture not only results in faster sedimentation that will eventually lead to clogging of the airbrush or pressure-gun, but it also interferes with paint adhesion to PVC. Therefore, a right balance has to be found between the particle amount, final paint thickness and the quality of the final PVC panel (end-finish); in addition to finding a proper paint formulation that would adhere to both mineral particles and PVC. Several structured paint compositions and methods of application are known in the art for example cf. WO9948834, US4956030, US3451833. Most of them however comprise complex mixtures of numerous ingredients that are difficult and/or expensive to manufacture, or involve many labour-intensive preparation steps, including primer application, in order to be fixable to PVC.

The present invention is made in view of the above-mentioned facts and stems from an unexpected observation that a waterborne acrylic paint comprising lower-alkyl acrylic polymer and/or styrene lower-alkyl acrylic copolymer binder and mineral particle content, can be suitable for PVC textural coating using spray painting.

### Summary of the invention

The present invention is defined in the appended independent claims. Preferred embodiments are defined in the dependent claims.

In particular, the present invention concerns a texture-painted PVC panel suitable for use in indoor as well as outdoor conditions, said texture-painted PVC panel comprising a PVC panel substrate and a coating applied on at least one main surface thereof, wherein said coating comprises a cured acrylic binder and mineral particles, preferably of mean particle size comprised between 0.02 and 2 mm, characterised in that said coating is applied directly on said at least one main surface without any intermediate primer layer.

In another aspect of the present invention, a method for texture-painting a PVC panel is provided, said method comprising the steps of:
(i) spray-coating at least one main surface of a PVC panel substrate with a waterborne acrylic paint without an intermediate primer layer, wherein said waterborne acrylic paint comprises
   - 10-80 wt.%, preferably 20-50 wt.%, most preferably about 30 wt.% water or water-based solvent mixture;
   - 1-20 wt.%, preferably 5-15 wt.%, most preferably 7-10 wt.% acrylic binder;
   - 5-30 wt.%, preferably 10-25 wt.%, more preferably 15-20 wt.%, most preferably about 17 wt.% mineral particles of mean particle size, preferably comprised between 0.02 and 2 mm;
(ii) drying the PVC panel spray-coated in (i).

In a yet another embodiment of the present invention, a use for a waterborne acrylic paint is provided in texture-painting of at least one main surface of PVC panel substrate without an intermediate primer layer.

### Brief description of the Figures and Tables

For a fuller understanding of the nature of the present invention, reference is made to the following detailed description taken in conjunction with the accompanying drawings or tables in which:

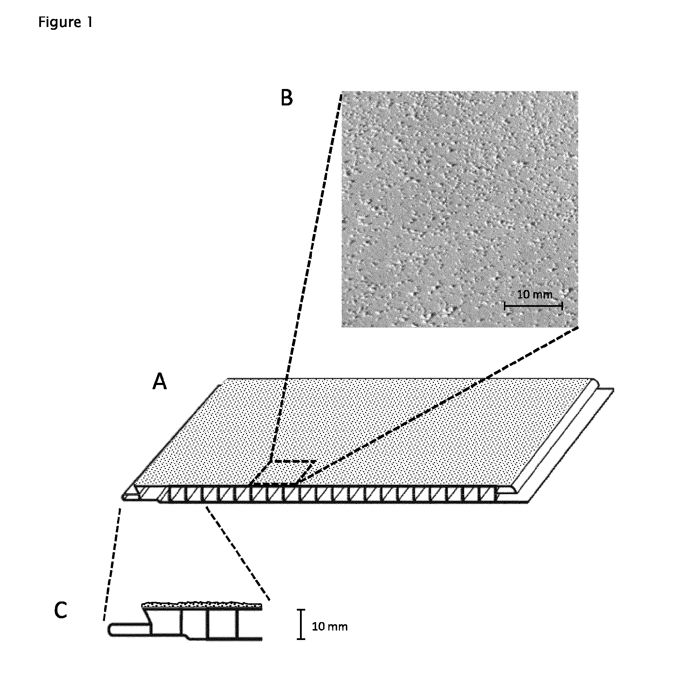

**Figure 1** schematically shows a texture-paint coated PVC panel according to one embodiment of the present invention (A). Upper section shows a magnified view of the sand-textured surface (B); scale is provided. Lower section shows cross sectional view of the PVC panel's side (C); scale is provided.

**Table 1:** shows grains sizes associated with particles classified as "coarse silt" or "sand" according to ISO 14688-1 scale.

### Definitions

As used herein the term "panel" refers to a rigid construction element for covering or cladding architectural surfaces such as walls, ceiling, floors, and the like. As used herein the term "panel" largely denotes a panel made of polyvinyl chloride (PVC) or unplasticised polyvinyl chloride (uPVC), and is further also referred to as "PVC panel". PVC panels are usually rectangular, flat, hollow-cored (as schematically shown in Figure 1) and relatively lightweight. A panel comprises two large flat "main surfaces" or "main profiles" and four narrow "side profiles", two of which are often manufactured with tongue-in-groove structures (as schematically shown in Figure 1A and C) allowing easy-installation with recessed fastening by either stapling or nailing to conceal the fastener. The construction of a PVC panel cladding is known within the skill in the art. In particular, as used herein the term **"PVC panel substrate"** refers to an uncoated PVC panel.

As used herein the term "texture-painted" refers to decorative covering of a substrate surface by means of paint that will dry forming a three-dimensional pattern of in-plane out-plane elements having a structured appearance. One example of a texture-painting is the so called "stucco". As used herein the term "texture-painting" primarily refers to coating a substrate with a paint comprising coarse silt- or sand-sized mineral particles (according to ISO 14688-1) that will dry or coalesce into a visibly structured pattern that is not smooth.

As used herein, the term **"acrylic paint"** refers to a paint containing pigment suspension in an acrylic polymer emulsion (known as "acrylic emulsion" in UK or "acrylic latex" in US). As used herein, the term **"waterborne"** refers to largely aqueous-based medium that may optionally comprise other solvents including, for example, isopropanol. In particular, the term **"waterborne acrylic paint"** refers to waterborne dispersion of sub-micrometer acrylic polymer particles that dry or cure by a process called "coalescence" where first the water and then the "trace" or "coalescing agent" evaporate, draw together, soften and thus cause fusing of the binder particles together into an irreversibly bound networked film, so that the paint cannot redissolve in the solvent/water that originally carried it.

As used herein the terms **"binder"** or "resin" denote the film-forming substance that 'binds' dry pigments and other paint components together and onto the substance surface. For example, for oil paints, linseed oil is the binder, for acrylic paints, acrylic polymer or copolymers serve as the binder.

As used herein, the term "acrylic polymer" or "acrylate polymers" refers to homopolymers made of or co-polymers with other monomers (e.g. acrylamides, acrylonitrile, vinyl, styrene, and butadiene) comprising acrylate monomers as building blocks.

As used herein the terms "acrylate monomers" or "acrylates" refer to esters and salts of acrylic or methacrylic acid.

As used herein, the term "coating" denotes the **"cured acrylic binder"** being the coalesced paint film formed by acrylic polymers or co-polymers, together with all components comprised or enclosed within said coalesced film, in particular the mineral particles, pigments, extender pigments etc.

A common examples of acrylates are alkyl esters of acrylic acid such as methyl-, butyl-, ethyl-, and 2-ethylhexyl-acrylate, wherein the term **"alkyl"** refers to a group consisting of a monovalent radical, such as ethyl or propyl, having the general formula CₙH₂ₙ₊₁. In particular, as used herein, the term **"lower alkyl"** shall be understood as an alkyl comprising fewer than seven carbon atoms.

As used herein the terms **"preparatory undercoat"** or, simply, **"primer"** refer to an initial or intermediate coating put on a substrate's surface in order to form a binding layer that is better prepared for receiving paint and ensure better adhesion of said paint to the substrate's surface and increase its durability.

As used herein the terms **"sand particles"** or, simply, **"sand"** are to be understood as denoting any mineral particles of right size comprised between 0.063 and 2 mm according to two recognised particle classification scales ISO 14688-1.

As used herein the terms **"coarse silt particles"** or, simply, **"coarse silt"** are to be understood as denoting any mineral particles of right size comprised between 0.02 and 0.063 mm according to two recognised particle classification scales ISO 14688-1.

As used herein, the term **"siliciclastic coarse silt or sand"** refers to coarse silt or sand particles rich in silica, usually comprising grains that originated as clasts or fragments of silicate rocks. These silts or sands typically consist of silicate minerals, such as quartz (SiO₂), feldspars (KAlSi₃O₈, NaAlSi₃O₈, and CaAl₂Si₂O₈,) and micas such as muscovite (KAl₂(AlSi₃O₁₀)(OH)₂) and biotite ((K(Fe,Mg)₃(AlSi₃O₁₀)(OH)₂). Other silicate mineral sands involve dark-colored to black Mg- and Fe-bearing silicates (mafic silicates) like hornblende, pyroxene, and even olivine, or less abundantly found zircon (ZrSiO₄), titanite, or sphene (CaTiOSiO₄). Further, as used herein, the term **"carbonate coarse silt or sand"** refers to coarse silt or sand particles largely formed from calcium carbonate (CaCO₃), commonly occurring as two minerals, aragonite and calcite.

As used herein, the term **"pigment"** means any dye or other substance, usually in a powder form, which imparts colour to paint formulation. Pigments can be both of organic or inorganic type and may also serve the role of fillers or extenders for pigments. Suitable pigments include alkali-earth carbonates such as chalk, calcium carbonate, magnesium carbonate, dolomite, precipitated and barium carbonate, talcum, alumina hydrates, zinc oxide, magnesium oxide, fluorite, basic lead carbonate, white and coloured pigments based on titanium dioxide, iron oxide red, iron oxide black, manganese black, carbons, barium yellow, strontium chromate, calcium chromate, zinc yellow, zinc green, cadmium yellow, cadmium red, cadmium vermilion, cadmopone, vermillon, ultramarine, lead chromate, chromium yellow, molybdate red, molybdate orange, chromoxide green, chromoxidehydrate green, manganese violet, manganese blue, cobalt blue, cobalt green, cobalt violet, naples yellow, and organic pigments of the azo series. A particular form of pigment is so called "paint extender" or "paint leveler" or **"extender pigment",** and as used herein it shall denote a substance, usually a pigment, added to paint formulation to increase its volume or bulk or properties like viscosity. Most extenders are white and possess a refractive index similar to commonly used binders (1.4-1.7). In comparison to TiO₂ which has a refractive index of around 2.7, they give little opacifying effect. Most occur naturally (they may need purifying), and others are produced synthetically. Most important extender pigments include but are not limited to calcium carbonate (synthetic and natural), silica, aluminium silicate (china clay), magnesium silicate (talc), barium sulphate (natural - barytes; synthetic - blanc fixe).

As used herein, the term **"coalescing agent"** refers to a substance used in paint for optimizing the film formation process of the polymeric binder particles. The film formation process in dispersion paints involves the coalescence of the polymeric particles, during and after the evaporation of the diluents (notably water), thereby permitting contact and fusion of adjacent polymeric dispersion particles. Coalescing agents typically reduce the minimal formation temperature and as a consequence to optimize film coherence and properties such as scrub resistance, mechanical properties as well as appearance.

As used herein, the abbreviations "wt.% " or "% w/w" refer to "percentage by weigh" (or "weight percent") unit relating to a mass fraction of a given component in a total mass of a composition.

As used herein, the term **"spray-coating"** refers to a coating in which liquid substances such as paints are sprayed through the air onto a surface of a substrate. The most common types of spray-coating employ compressed gas (usually air) to atomize and direct the paint particles by means of a spray guns or, much smaller airbrushes. Air gun spraying uses larger equipment and is typically used for covering large surfaces with an even coating of liquid. Spray guns can be either automated or hand-held and have interchangeable heads to allow different spray patterns.

### Detailed description of the invention

The present invention concerns a texture-painted PVC panel comprising a PVC panel substrate and a coating applied on at least one main surface thereof, wherein said coating comprises a cured acrylic binder and mineral particles of mean particle size comprised between 0.02 and 2 mm **characterised in that** said coating is applied directly on said at least one main surface without any intermediate primer layer.

In one aspect of the invention, said coating comprises 10-90% wt.% mineral particles such as coarse silt or sand particles defined in accordance with the ISO 14688-1 scale.

The PVC panel according to the present invention can be any panel suitable or architectural coating or cladding, manufactured from PVC or uPVC and preferably having unvarnished PVC or uPVC on its surfaces and profiles. Said panels is preferably of substantial rectangular shape as depicted in Figure 1, comprising longitudinal side edges of complementary shape allowing multiple such PVC panels to be assembled together.

In a preferred embodiment of the texture-painted PVC panel according the invention, the acrylic binder is a polymer of alkyl ester of acrylic or methacrylic acid, or is a styrene-copolymer of alkyl ester of acrylic or methacrylic acid.

Styrene-acrylic copolymer coated panels are particularly advantageous for humid localisation as styrene enhances moisture-resistance properties as well as enhances binding power and elastic characteristics of the coating. However, styrene-acrylic copolymer-based paint compositions tend to become pale on exposure and thus pure acrylic polymer-based coating is preferred in outdoor conditions exposed to sun due to its better colour retention (less yellowing), chalk resistance and resistance to embrittlement and cracking on long term exposure. Preferred styrene/acrylic emulsions contain up to 20- 25 wt.%, or even up to 50 wt.% styrene when calculated on total monomer composition, but depending on the application styrene can be present in the resin even up to 70 wt.%.

In a preferred embodiment, the alkyl group of the alkyl ester present in the acrylic binder polymer or acrylic binder copolymer with styrene of the PVC of present invention, is provided by a lower alkyl or, in other words, the alkyl group of said alkyl ester comprises fewer than seven carbon atoms. In particular embodiments of the invention, said alkyl ester is selected from the group consisting of:
methyl acrylate or methacrylate, ethyl acrylate or methacrylate, n-propyl acrylate or methacrylate, isopropyl acrylate or methacrylate, n-butyl acrylate or methacrylate, isobutyl acrylate or methacrylate, sec-butyl acrylate or methacrylate, tert-butyl acrylate or methacrylate, acrylate or methacrylate of n-pentyl or isomer thereof, acrylate or methacrylate of n-hexyl or isomer thereof, and/or mixtures of the same.

In particularly preferred embodiments of the present invention, said alkyl ester is preferably selected from a group consisting of: n-butyl acrylate or methacrylate, isobutyl acrylate or methacrylate, sec-butyl acrylate or methacrylate, tert-butyl acrylate or methacrylate, and/or mixtures of the same, and post preferably is selected from a group consisting of n-butyl acrylate, isobutyl acrylate, sec-butyl acrylate, tert-butyl acrylate, and/or mixtures of the same.

In alternative embodiments of the present invention, a PVC panel is provided wherein said acrylic binder is selected from the group consisting of n-butyl acrylate polymer, isobutyl acrylate polymer, sec-butyl acrylate polymer, tert-butyl acrylate polymer, styrene-n-butyl acrylate copolymer, styrene- isobutyl acrylate copolymer, styrene- sec-butyl acrylate copolymer, styrene- tert-butyl acrylate copolymer, and/or mixtures of the same.

The polymers can be prepared using conventional emulsion polymerization techniques. For example, conventional initiators, solvents, emulsifiers, chain transfer agents, etc., are introduced along with the desired monomers into a temperature controlled reactor and agitator. The reaction can be carried out in an oxygen-free environment for sufficient time to convert the monomers to polymer. The molecular weight of the polymer can vary. The use of alkyl acrylic esters in preparing polymers and copolymers by aqueous suspension polymerization are disclosed e.g. in US3691140. Similarly, styrene-acrylate copolymer resins suitable for the use in the present invention may be produced by a variety of polymerization methods know to the art. For example, the resins may also be produced by conventional solution polymerization or emulsion polymerization. The resins of the present invention may also advantageously be produced by a starve-fed emulsion polymerization process, such as that disclosed in US08264205.

In a further embodiment of a PVC panel according to the present invention, the wherein said mineral particles are any type of natural or synthetic coarse silts or sand particles, and preferably comprise siliciclastic coarse silt or sand particles, carbonate (CaCO₃) coarse silt or sand particles, or mixtures thereof, wherein the coarse silt or sand is defined in accordance with the ISO 14688-1 scale

In principle, texture for the texture painted panel of the present invention can be provided by any type of mineral particles within the size between coarse silt (between 0.02 and 0.063 mm) and sand particles (between 0.063 and 2 mm), i.e. between 0.02 and 2 mm as defined by the International scale ISO 14688-1 that establishes the basic principles for the identification and classification of soils on the basis of material and mass characteristics for soils for engineering purposes (cf Table 1)

**Table 1**

| **Aggregate name (ISO 14688-1)** | **Size range (metric)** |
|---|---|
| Coarse sand, CSa | 0.63 - 2.0 mm |
| Medium sand, MSa | 0.2 - 0.63 mm |
| Fine sand, FSa | 0.063 - 0.2 mm |
| Coarse silt, CSi | 0.02 - 0.063 mm |

In one preferred embodiment, a PVC panel is provided, wherein the size of said mineral particles is within a range of P1 500 to P30, i.e. within a range of 0.02 mm (1/1500 inch) to 1/30 inch (0.85 mm). In further advantageous embodiment, the size of said mineral particles is within a range of coarse silt to medium sand-size particle, i.e. wherein the size of said coarse silt and medium sand particles is comprised between 0.02 and 0.63 mm in accordance with the ISO 14688-1 scale.

In particularly preferred embodiments of a PVC panel according to the invention, the coarse silt and/or sand particles are siliciclastic coarse silt or sand particles, preferably in the form of quartz or feldspar or other silicate minerals. As defined above, siliciclastic silts or sands consisting of grains that originated as clasts or fragments of silicate rocks and thus typically consist of silicate minerals, most commonly quartz (SiO₂), feldspars (KAlSi₃O₈, NaAlSi₃O₈, and CaAl₂Si₂O₈,) and micas such as muscovite (KAl₂(AlSi₃O₁₀)(OH)₂) and biotite ((K(Fe,M₉)₃(AlSi₃O₁₀)(OH)₂), but also many others.

In further aspects of the present invention, a texture-painted PVC panel is provided, wherein said coating further comprises at least one pigment or extender pigment.

As defined above, "the term "pigment" refers to at least one colour substance such as, but not limited to, titanium dioxide (TiO₂). Accordingly, the term "extender pigment" refers to a pigment substance added to paint formulation to increase its volume or bulk or properties like viscosity, most prominent examples include synthetic or natural calcium carbonate and silica.

In particular embodiments, the cured acrylic binder coating the PVC panel of present invention comprises 20-65 wt.%, preferably 35-55 wt.%, most preferably between 40-45 wt.% pigments or extender pigments. In preferred arrangements, said cured acrylic binder comprises between 25-55 wt.%, preferably between 35-45 wt.% extender pigments comprising calcium carbonate or silica. In detailed embodiments, said cured acrylic binder comprises at least 20 wt.% calcium carbonate. In further embodiments, said cured acrylic binder comprises at least 10 wt.% calcium silica. In a particular embodiment, said cured acrylic binder comprises at least 10 wt.%, preferably at least 20 wt.%, calcium carbonate and at least 5 wt.%, preferably at least 10 wt.% silica.

In a further aspect, the present invention provides a method for texture-painting a PVC panel, characterized in that the method comprises the steps of:
(i) spray-coating at least one main surface of a PVC panel substrate with a waterborne acrylic paint without an intermediate primer layer, wherein said waterborne acrylic paint comprises
   - 10-80 wt.%, preferably 20-50 wt.%, most preferably about 30 wt.% water or water-based solvent mixture;
   - 1-20 wt.%, preferably 5-15 wt.%, most preferably 7-10 wt.% acrylic binder;
   - 5-30 wt.%, preferably 10-25 wt.%, more preferably 15-20 wt.%, most preferably about 17 wt.% mineral particles of mean particle size comprised between 0.02 and 2 mm;
(ii) drying the PVC panel spray-coated in (i).

Following the drying step in (ii), the waterborne acrylic paint of above-described method of the present invention, will cure into a cured acrylic binder according to particular embodiments of a texture coated PVC panel of the invention, as described above.

It should be noted that the term "waterborne" indicates that water is the primary solvent for the acrylic emulsion of the texture paint for coating of a PVC panel of the invention. This means that the acrylic emulsion of said pain is primarily comprised in an aqueous medium, however said medium may also comprise other solvents including, for example, isopropanol, as will be readily appreciated by a person skilled in the art.

In preferred embodiments, the present invention provides a method wherein said acrylic binder is a polymer of alkyl ester of acrylic or methacrylic acid, or is a styrene-copolymer of alkyl ester of acrylic or methacrylic acid.

In further embodiments of the method of the invention, the alkyl group of said alkyl ester preferably comprises fewer than seven carbon atoms and even more preferably is selected from the group consisting of:
methyl acrylate or methacrylate, ethyl acrylate or methacrylate, n-propyl acrylate or methacrylate, isopropyl acrylate or methacrylate, n-butyl acrylate or methacrylate, isobutyl acrylate or methacrylate, sec-butyl acrylate or methacrylate, tert-butyl acrylate or methacrylate, acrylate or methacrylate of n-pentyl or isomer thereof, acrylate or methacrylate of n-hexyl or isomer thereof, and/or mixtures of the same.

In a particular embodiment, the acrylic binder of the waterborne acrylic paint in the method according to the invention is advantageously is selected from the group consisting of n-butyl acrylate polymer, isobutyl acrylate polymer, sec-butyl acrylate polymer, tert-butyl acrylate polymer, styrene-n-butyl acrylate copolymer, styrene- isobutyl acrylate copolymer, styrene- sec-butyl acrylate copolymer, styrene- tert-butyl acrylate copolymer, and/or mixtures of the same.

In further aspects, said waterborne acrylic paint of the method according to the invention further comprises any of the following:
- 10-70 wt.%, preferably 20-60 wt.%, more preferably 30-50 wt.% , most preferably 35-45 wt.% CaCO₃ and/or silica as extender pigment;
- 0.5-30 wt.%, preferably 1-20 wt.%, more preferably 5-15 wt.% , most preferably about 10 wt.% pigment,
- 0.05-5 wt.%, preferably 0.2-2 wt.%, most preferably 0.5-1 wt.% at least one coalescing agent.

Useful coalescing agents include glycol ethers such as ethylene glycol monomethyl ether, ethylene glycol monoethyl ether, ethylene glycol monobutyl ether, diethylene glycol monobutyl ether, diethylene glycol diethyl ether, and propylene glycol phenol ether; glycol ether acetates such as diethylene glycol monoethyl ether acetate and ethylene glycol monomethyl ether acetate; and ketones such as acetone, methyl ethyl ketone, methyl propyl ketone, and diacetone alcohol. A commonly used coalescing agent propylene glycol phenyl ether (PPh) evaporates slowly and does not mix with water, and thus allows gradual and even curing process. PPh is commonly formulated into architectural and industrial coatings, electrodeposition coatings, textile dyes, textile printing pastes, paint removers, latex adhesives and inks for ball-point pens, felt-tip pens, and stamp pads. Further examples of commonly used coalescing agent comprise a variety of commercial mixture of aliphatic hydrocarbons produced from petroleum-based raw materials, such as e.g. the ones of Exxsol D40 type. Their major components usually include normal paraffins, isoparaffins, and cycloparaffins. Another examples include mixtures of refined diisobutyl esters of adipic, glutaric and succinic acids, such as the ones in the commercial Coasol (Lusolvan FBH) formulations. These substances are known in the art for improving flow and wetting properties of waterborne paints as well as modification of their desired minimum film formation temperature (MFFT)

Thus, in further a development of the above-described embodiment of a method according to the invention, the coalescing agent is advantageously selected from the group comprising:
- a mixture of propylene glycol phenyl ethers (PPh),
- a mixture of aliphatic hydrocarbons such as paraffins, isoparaffins, and cycloparaffins;
- a mixture of refined diisobutyl esters of adipic, glutaric, or succinic acids;
- a mixture of any of the above (a), (b), or (c).

In further aspects, the method according to any of the previously described embodiments of the present invention, uses a waterborne acrylic paint that is further any of the following:
- alkali resistant;
- plasticizer free;
- unsaponifiable;
- any combination of the above (a), (b), or (c).

Spraying-coating or blasting of the PVC panel according to the method of the invention can be performed according to any known technique in the art. Preferably, it is performed at room temperature using spray guns.

Similarly, drying of the spray-coated panel according to the invention can by performed according to any suitable drying method known in the art, but preferably is done by air-drying.

In the last aspect of the invention, a use is provided of a waterborne acrylic paint for texture-painting of at least one main surface of a PVC panel substrate without an intermediate primer layer, wherein said waterborne acrylic paint comprises:
- between 10-80 wt.%, preferably 20-50 wt.%, most preferably about 30 wt.% water or water-based solvent mixture;
- between 1-20 wt.%, preferably 5-15 wt.%, most preferably 7-10 wt.% acrylic binder;
- between 5-30 wt.%, preferably 10-25 wt.%, more preferably 15-20 wt.%, most preferably about 17 wt.% sand particles, wherein size of said sand particles is comprised between 0.063 and 2 mm in accordance with the ISO 14688-1 scale;
and optionally further comprises:
- 10-70 wt.%, preferably 20-60 wt.%, more preferably 30-50 wt.% , most preferably 35-45 wt.% CaCO₃ and/or silica as extender pigment;
- 0.5-30 wt.%, preferably 1-20 wt.%, more preferably 5-15 wt.% , most preferably about 10 wt.% pigment,
- 0.05-5 wt.%, preferably 0.2-2 wt.%, most preferably 0.5-1 wt.% at least one coalescing agent.

### Examples of the invention

### Exemplary coarse silt or sand texture-paint formulation of white colour:

**(i) PARTICLES OF COARSE SILT AND SAND COMPONENT (30wt.% of total particles** + **paint** **mixture**) coarse silt and sand particles within a range of P1 500 to P30, i.e. within a range of 0.02 mm (1/1500 inch) to 1/30 inch (0.85 mm).:
**(ii) LIQUID PAINT COMPOSITION (70 wt.% of total particles** **+** paint mixture)
   29.9 wt% solvent mixture, wherein:
      - 28.13 wt% = water
      - 0.77 wt% coalescing agents, wherein:
         - 0.28% = mixture of aliphatic hydrocarbons of the Exxsol D40 type
         - 0.49% = Coasol (=Lusolvan FBH)
   70.1 % dry matter in solvent, wherein:
      - 61.8% = solids:
         - Pigments = 16.4 wt% of solids (10.13 wt.% of total paint) titanium dioxide TiO2
         - Extender pigments = about 83.6 wt% (52 wt.% of total paint), wherein
            Si = 27.5 wt% in solids (52 wt.% of total paint)
            CaCO3 = about 56.1 wt% in solids (52 wt.% of total paint)
         - 8.3% = binder = butyl acrylate-styrene copolymer (styrene/butyl acrylate (Sty/BA))

The above paint composition comprising mineral particles results in a white sand paint having good adhesion properties, high pigmentation, good coverage breathing and scrub, water absorption of 0.13 [kg/(m²*-t)], water vapor permeability of about 87.3 [g/(m²* d)].

A fragment of a PVC panel substrate surface texture-painted with the above-formulated paint is shown in Figure 1B.

## Claims

1. A texture-painted PVC panel comprising a PVC panel substrate and a coating applied on at least one main surface thereof, wherein said coating comprises a cured acrylic binder and mineral particles **characterised in that** said coating is applied directly on said at least one main surface without any intermediate primer layer.

2. A PVC panel according to claim 1, wherein said acrylic binder is a polymer of alkyl ester of acrylic or methacrylic acid, or is a styrene-copolymer of alkyl ester of acrylic or methacrylic acid.

3. A PVC panel according to claim 2, wherein alkyl group of said alkyl ester comprises fewer than seven carbon atoms.

4. A PVC panel according to claim 3, wherein said alkyl ester is selected from the group consisting of:
methyl acrylate or methacrylate, ethyl acrylate or methacrylate, n-propyl acrylate or methacrylate, isopropyl acrylate or methacrylate, n-butyl acrylate or methacrylate, isobutyl acrylate or methacrylate, sec-butyl acrylate or methacrylate, tert-butyl acrylate or methacrylate, acrylate or methacrylate of n-pentyl or isomer thereof, acrylate or methacrylate of n-hexyl or isomer thereof, and/or mixtures of the same; and is preferably selected from a group consisting of:
n-butyl acrylate, isobutyl acrylate, sec-butyl acrylate, tert-butyl acrylate, and/or mixtures of the same.

5. A PVC panel according to claim 2, wherein said acrylic binder is selected from the group consisting of n-butyl acrylate polymer, isobutyl acrylate polymer, sec-butyl acrylate polymer, tert-butyl acrylate polymer, styrene-n-butyl acrylate copolymer, styrene- isobutyl acrylate copolymer, styrene- sec-butyl acrylate copolymer, styrene-tert-butyl acrylate copolymer, and/or mixtures of the same.

6. A PVC panel according to any of the preceding claims, wherein said mineral particles are any type of natural or synthetic coarse silts or sand particles, and preferably comprise siliciclastic coarse silt or sand particles, carbonate (CaCO₃) coarse silt or sand particles, or mixtures thereof, wherein the coarse silt or sand is defined in accordance with the ISO 14688-1 scale.

7. A PVC panel according to claim 6, wherein said coarse silt or sand particles are siliciclastic coarse silt or sand particles, preferably in the form of quartz or feldspar.

8. A PVC panel according to any of the preceding claims, wherein said coating further comprises at least one pigment or extender pigment.

9. A method for texture-painting a PVC panel, **characterized in that** the method comprises the steps of:
(i) spray-coating at least one main surface of a PVC panel substrate with a waterborne acrylic paint without an intermediate primer layer, wherein said waterborne acrylic paint comprises
- 10-80 wt.%, preferably 20-50 wt.%, most preferably about 30 wt.% water or water-based solvent mixture;
- 1-20 wt.%, preferably 5-15 wt.%, most preferably 7-10 wt.% acrylic binder;
- 10-60 wt.%, preferably 20-50 wt.%, more preferably 30-40 wt.%, mineral particles (ii) drying the PVC panel spray-coated in (i).

10. A method according to claim 9 wherein said acrylic binder is a polymer of alkyl ester of acrylic or methacrylic acid, or is a styrene-copolymer of alkyl ester of acrylic or methacrylic acid.

11. A method according to any of claims 9-10, wherein said waterborne acrylic paint further comprises any of the following:
- 10-70 wt.%, preferably 20-60 wt.%, more preferably 30-50 wt.% , most preferably 35-45 wt.% CaCO₃ and/or silica as extender pigment;
- 0.5-30 wt.%, preferably 1-20 wt.%, more preferably 5-1 wt.% , most preferably about 10 wt.% pigment,
- 0.05-10 wt.%, preferably 0.2-5 wt.%, most preferably 0.5-2 wt.% at least one coalescing agent.

12. A method according to any of claim 11, wherein said coalescing agent is selected from the group comprising:
(a) a mixture of propylene glycol phenyl ethers (PPh),
(b) a mixture of aliphatic hydrocarbons such as paraffins, isoparaffins, and cycloparaffins;
(c) a mixture of refined diisobutyl esters of adipic, glutaric, or succinic acids;
(d) a mixture of any of the above (a), (b), or (c).

13. A method according to claims 10-11, wherein said waterborne acrylic paint is further any of the following:
(a) alkali resistant;
(b) plasticizer free;
(c) unsaponifiable;
(d) any combination of the above (a), (b), or (c).

14. A method according to any of the claims 10-12, wherein drying is air-drying.

15. Use of a waterborne acrylic paint for texture-painting of at least one main surface of PVC panel substrate without an intermediate primer layer, wherein said waterborne acrylic paint comprises:
- 10-80 wt.%, preferably 20-50 wt.%, most preferably about 30 wt.% water or water-based solvent mixture;
- between 1-20 wt.%, preferably 5-15 wt.%, most preferably 7-10 wt.% acrylic binder;
- 10-60 wt.%, preferably 20-50 wt.%, more preferably 30-40 wt.%, mineral particles
and optionally further comprises:
- 10-70 wt.%, preferably 20-60 wt.%, more preferably 30-50 wt.% , most preferably 35-45 wt.% CaCO₃ and/or silica as extender pigment;
- 0.5-30 wt.%, preferably 1-20 wt.%, more preferably 5-15 wt.% , most preferably about 10 wt.% pigment,
- 0.05-10 wt.%, preferably 0.2-5 wt.%, most preferably 0.5-2 wt.% at least one coalescing agent.
